(19) Europäisches Patentamt
European Patent Office
Office européen des brevets

(11) Veröffentlichungsnummer: 0 236 896
A1

(12) # EUROPÄISCHE PATENTANMELDUNG

(21) Anmeldenummer: 87102911.2

(22) Anmeldetag: 02.03.87

(51) Int. Cl.³: C 08 G 73/02
D 06 P 5/08

(30) Priorität: 11.03.86 DE 3607963

(43) Veröffentlichungstag der Anmeldung: 16.09.87 Patentblatt 87/38

(84) Benannte Vertragsstaaten: BE CH DE FR GB IT LI

(71) Anmelder: BAYER AG
Konzernverwaltung RP Patentabteilung
D-5090 Leverkusen 1 Bayerwerk(DE)

(72) Erfinder: Hendricks, Udo, Dr.
Am Höhenfeld 12
D-5068 Odenthal(DE)

(72) Erfinder: Tamer, Ergun, Dipl.-Ing.
Zedernweg 37
D-5090 Leverkusen 3(DE)

(54) **Kondensationsprodukte und Verfahren zur Nachbehandlung von gefärbten Polyamiden.**

(57) Kondensationsprodukte aus Alkylendiaminen der Formel

$$H_2N-C_nH_{2n}-NH_2$$

in der

n für 4 – 10 steht,

und

Epihalogenhydrin oder 1,3-Dihalogen-2-hydroxypropan werden zur Nachbehandlung von mit anionischen Farbstoffen gefärbten, Polyamidgruppen enthaltenden natürlichen und synthetischen Fasermaterialien verwendet.

EP 0 236 896 A1

BAYER AKTIENGESELLSCHAFT 5090 Leverkusen, Bayerwerk
Konzernverwaltung RP
Patentabteilung Mi/cm/c

# Kondensationsprodukte und Verfahren zur Nachbehandlung von gefärbten Polyamiden

Gegenstand der Erfindung sind Kondensationsprodukte aus Alkylendiaminen der Formel

$$H_2N - C_nH_{2n} - NH_2 \qquad I,$$

in der

n für 4 - 10 steht,

und

Epihalogenhydrin oder 1,3-Dihalogen-2-hydroxypropan sowie Verfahren zur Nachbehandlung von mit anionischen Farbstoffen gefärbten, Polyamidgruppen enthaltenden natürlichen und synthetischen Fasermaterialien mit diesen Kondensationsprodukten.

Der Alkylenrest $C_nH_{2n}$ in Formel (I) kann geradkettig oder verzweigt sein. Bevorzugte Alkylenreste sind der Tetramethylen- und ein gegebenenfalls durch 1 - 3 Methylgruppen substituierter Hexamethylen-Rest.

Als Beispiele für Alkylendiamine der Formel (I) seien genannt:

Tetramethylendiamin, Hexamethylendiamin, 2,2,4- und 2,4,4-Trimethylhexamethylendiamin.

Halogen steht vorzugsweise für Chlor oder Brom.

Als Epihalogenhydrin wird Epichlorhydrin und als 1,3-Dihalogen-2-hydroxypropan wird 1,3-Dichlor-2-hydroxypropan bevorzugt.

Die erfindungsgemäßen Kondensationsprodukte sind wasserlöslich. Insbesondere sind Kondensationsprodukte, die durch Umsetzung von Alkylendiaminen (I) und Epihalogenhydrin oder 1,3-Dihalogen-2-hydroxypropan im Molverhältnis 1:1 bis 1:3, besonders im Molverhältnis 1:1,8 bis 1:2,2 erhalten werden, zu nennen.

Die Umsetzung erfolgt insbesondere in einem polaren Lösungsmittel, vorzugsweise Wasser, bei Temperaturen von 10°C bis 90°C, besonders zwischen 30°C und 50°C, während 30 Minuten bis 4 Stunden. Höhere Reaktionstemperaturen verkürzen die Reaktionszeit.

Um eine zu weit gehende Kondensation zu verhindern und die Lagerstabilität der Produkte zu erhöhen, hat es sich als zweckmäßig erwiesen, gegen Ende der Reaktionszeit den pH-Wert der Reaktionsgemische durch Zusatz anorganischer oder organischer Säuren auf Werte unter 7, besonders unter 5, einzustellen. Vorzugsweise werden zur Einstellung des pH-Wertes Mineralsäuren, insbesondere Salzsäure, verwendet. Die wäßrigen Lösungen der neutralisierten Kondensationsprodukte weisen bei einem Feststoffgehalt von 35 % Viskositäten von 30 - 800 mPa.s bei 20° C auf, vorzugsweise von mehr als 200 mPa.s.

Das erfindungsgemäße Verfahren zur Nachbehandlung von Fasermaterialien mit den vorstehend beschriebenen Kondensationsprodukten wird nach an sich bekannten Methoden durchgeführt.

Bei den zur Nachbehandlung eingesetzten Textilmaterialien kann es sich um Wolle, Seide und synthetische Polyamide wie Polymere von ε-Caprolactam und Polymere aus Dicarbonsäure und Diaminen, z.B. aus Adipinsäure und Hexamethylendiamin handeln. Die Textilmaterialien können in Form von Flocke, Kammzug, Garn oder Stückware vorliegen. Bevorzugt wird das Verfahren zur Nachbehandlung von gefärbter Wolle angewendet. Dabei kann es sich um unchlorierte oder chlorierte oder durch eine Kunstharzvorbehandlung filzfrei ausgerüstete Wolle handeln; besonders gute Effekte werden bei der Nachbehandlung von Färbungen auf chlorierter oder durch eine Kunstharzvorbehandlung filzfrei ausgerüsteter Wolle erhalten.

Die Chlorierung der Wolle kann nach üblichem Verfahren kontinuierlich oder diskontinuierlich mit unterchloriger Säure oder mit Chlorisocyanurat vorgenommen werden.

Die Filzfreiausrüstung kann nach verschiedenen bekannten Verfahren erfolgen, z.B. nach dem HERCOSETT-Verfahren. Bei diesen auch als Superwash-Ausrüstung bekannten Verfahren handelt es sich um Chlorierungsverfahren und um Verfahren, bei denen die Faser mit einem Harz, z.B. einem Polyurethan-, Polyacryl-, Melamin-, Polyalkylenimin/Epichlorhydrin- oder Polyamid/Epichlorhydrin-Harz behandelt wird.

Verfahren dieser Art sind beispielsweise beschrieben bei M. Bahra, Zeitschrift für die gesamte Textilindustrie, 1964, Nr. 6, S. 519 - 522; G. Meier, textilpraxis international, 1975, Heft 1, S. 76 - 79 und Heft 3, S. 304 - 306; R.R.D. Holt, Journal of the Society of Dyers and Colourists, 1975, Nr. 2, S. 38-44.

Die erfindungsgemäßen Kondensationsprodukte werden den Nachbehandlungsbädern vorzugsweise in Form wäßriger Lösungen zugesetzt, wobei die Mengen der Kondensationsprodukte in weiten Grenzen schwanken können.

Im allgemeinen hat sich ein Zusatz von 0,5 - 6, vorzugsweise 1 - 4 Gewichtsprozent, bezogen auf das Gewicht der Fasermaterialien, bewährt.

Die Nachbehandlung des Textilmaterials wird zweckmäßig in der Weise durchgeführt, daß man das gefärbte Material, vorzugsweise bereits filzfrei ausgerüstete Wolle, in eine wäßrige Flotte einbringt, die die erfindungsgemäßen Kondensationsprodukte enthält und einen pH-Wert zwischen 6 und 10 aufweist. Vorzugsweise wird die Flotte durch Zusatz alkalischer Verbindungen, z.B. Ammoniak oder Soda, auf einen pH-Wert von 8 - 10 eingestellt.

0236896

Man steigert die Temperatur des Behandlungsbades im Verlauf von 20 - 30 Minuten auf 50 - 80°C und beläßt sie während 5 - 30 Min. dabei. Anschließend wird das Material mit kaltem Wasser gespült, mit Essigsäure abgesäuert, entwässert und getrocknet.

Die Nachbehandlung kann, wie oben beschrieben, nach dem Ausziehverfahren oder auch kontinuierlich oder halbkontinuierlich durch Foulardieren oder Sprühen mit anschließender Hitzeeinwirkung erfolgen.

Die Wirkung der erfindungsgemäßen Kondensationsprodukte kann von Fall zu Fall durch Mitverwendung von nichtionischen, kationischen oder amphoteren, grenzflächenaktiven Substanzen noch erhöht werden. Solche Substanzen sind beispielsweise Ethylen- und/oder Propylenoxid-Addukte von Fettaminen, die quaterniert und/oder sulfatiert sein können. Sie sind dem Fachmann als Egalisierhilfsmittel für Wollfarbstoffe bekannt.

Die Einsatzmenge solcher Produkte beträgt 50 - 100 % bevorzugt 70 - 80 %, der Menge der erfindungsgemäßen Kondensationsprodukte.

Mit Hilfe des erfindungsgemäßen Verfahrens werden die Echtheitseigenschaften, besonders die Naßechtheiten wie die Schweißechtheit nach IWS-TM 174 (Prüfmethode für alkalische Schweißechtheit) und die Waschechtheit nach IWS-TM 193 (Prüfmethode für Waschechtheit) erheblich verbessert.

Als Farbstoffe kommen die üblicherweise für das Färben von Polyamidgruppen enthaltenden Fasern verwendeten Farbstoffe, z.B. Säurefarbstoffe, Metallkomplexfarbstoffe wie 1:1-Metallkomplexfarbstoffe, die wasserlöslichmachende Gruppen wie Sulfonsäure- oder Carbonsäuregruppen oder auch Sulfonamid- oder Alkylsulfonreste enthalten können, sowie Reaktivfarbstoffe in Frage. Sie sind im Colour Index näher beschrieben. Solche Farbstoffe, die sonst gute Echtheitseigenschaften besitzten, ergeben auf filzfrei ausgerüsteten, keratinhaltigen Materialien - besonders bei tiefen Farbtönen - weniger echte Färbungen.

Es wurde überraschenderweise gefunden, daß die verschlechterten Echtheitseigenschaften dieser Färbungen ein verblüffend hohes Echtheitsniveau erhalten, wenn sie mit den erfindungsgemäßen Kondensationsprodukten nachbehandelt werden, ohne daß dabei die Reibechtheit der Färbungen negativ beeinflußt wird.

Die in den Beispielen und Herstellungsvorschriften angegenenen Teile sind, wenn nicht anders vermerkt, Gewichtsteile. Die angegenen Farbstoffmengen beziehen sich auf die Angaben in Colour Index, 3. Auflage, Band 5 (1971).

## Herstellungsbeispiel 1

58 Tle. Hexamethylendiamin wurden in 60 Tln. Wasser gelöst und bei 20 - 25°C in einer Std. tropfenweise mit 92,5 Tln. Epichlorhydrin versetzt.

Nach dreistündigem Rühren bei 33 - 35° wurde auf 43 - 45° erwärmt und 1 Std. bei gleicher Temperatur gerührt. Die Mischung, deren Viskosität sich stark erhöht hatte, wurde mit 100 Tln. Wasser verdünnt und 50 Minuten bei 43 - 45°C gerührt. Dann wurde nochmals mit 100 Tln. Wasser verdünnt und mit 32 Tln. konz. Salzsäure auf einen pH-Wert von 4 - 4,5 eingestellt. Man erhielt eine klare, gelbliche Lösung mit einem Feststoffgehalt von 37 % und einer Viskosität von 655 mPa.s bei 20°.

## Herstellungsbeispiel 2

58 Tle. Hexamethylendiamin wurden in 60 Tln. Wasser gelöst und bei 20 - 30° in einer Stunde mit 69 Tln. Epichlorhydrin versetzt. Nach dreistündigem Rühren bei 30 - 32° wurde auf 40 - 42° erwärmt und 50 Minuten bei 40 - 42°C gerührt. Nach dem Zusatz von 100 ml Wasser wurde mit 52 g konz. Salzsäure auf einen pH-Wert von 4 - 4,5 eingestellt.

Man erhielt eine klare Lösung mit einem Feststoffgehalt von 43,8 % und einer Viskosität von 97 mPa.s bei 20°.

0236896

## Herstellungsbeispiel 3

79 Tle. eines Gemisches aus 2,2,4-Trimethyl-1,6-hexandiamin wurden mit 70 Tln. Wasser vermischt und bei 40 - 45° C in 45 Minuten mit 92,5 Tln. Epichlorhydrin versetzt. Nach der Zugabe wurde die Mischung 3 Std. bei 50 - 55° C gerührt, dann mit 50 Tln. Wasser verdünnt und nochmals 80 Minuten bei gleicher Temperatur gerührt. Anschließend wurde mit 32 Tln. konz. Salzsäure auf einen pH-Wert von 4 - 4,5 gestellt. Man erhielt eine klare Viskose Lösung mit einem Trockengehalt von 57 %.

In 35 %iger Lösung wurde eine Viskosität von 32 mPa.s bei 20° C gemessen.

## Anwendungsbeispiel 1

Garn aus Wolle, die mit HERCOSETT 57 "Superwash" ausgerüstet wurde (Chlorierung und Behandlung mit einem Adipinsäure/Diethylentriamin-Epichlorhydrin-Umsetzungsprodukt), wird im Flottenverhältnis von 1:20 bei Raumtemperatur während 15 Minuten mit einer Färbeflotte behandelt, die im Liter

1,0 g des Farbstoffes C.I. Acid Blue 49
(= Nr. 62 095)
2,0 g Natriumsulfat kalz.
1,5 g Essigsäure (60 %)
0,5 g des Egalisierhilfsmittels folgender Formel

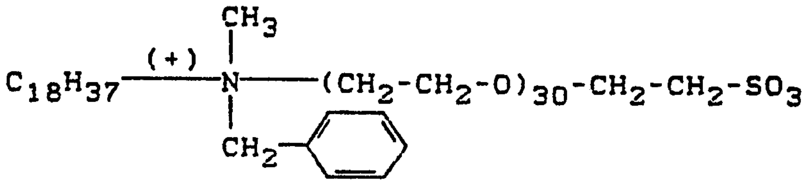

enthält. Man erhitzt das Färbebad innerhalb von 60 Minuten zum Kochen und färbt während 60 Minuten bei dieser Temperatur. Anschließend wird gespült.

Die Nachbehandlung erfolgt auf folgendem Wege: Die erhaltene Wolle wird im Flottenverhältnis von 1:20 mit einer wäßrigen Flotte, die im Liter

2,0 g des Reaktionsproduktes gemäß Herstellungsbeispiel 1

enthält, 5 Minuten bei Raumtemperatur behandelt. Dann wird innerhalb von 15 Minuten auf 50°C erhitzt, 5 Minuten bei dieser Temperatur belassen, durch Zugabe von Soda auf pH 9.0 - 9.5 eingestellt und während 25 Minuten bei 50°C weiterbehandelt. Anschließend wird gespült, mit Essigsäure abgesäuert, entwässert und getrocknet.

Die Echtheitsprüfungen, die bei dieser nachbehandelten Färbung durchgeführt werden, zeigen, daß das Echtheitsniveau durch die Nachbehandlung wesentlich verbessert wird, so daß die IWS-Spezifikationen (IWS-TM 193, IWS-TM 174) ohne weiteres erreicht sind; dies geschieht ohne Verschlechterung der Reibechtheit.

Ein sehr gutes Echtheitsniveau wird auch erhalten, wenn anstelle von C.I. Acid Blue 49 der Farbstoff Acid Blue 335 eingesetzt wird.

Anwendungsbeispiel 2

Man verfährt wie in Beispiel 1 beschrieben mit dem Unterschied, daß die Nachbehandlung mit einer Flotte erfolgt, die im Liter

1,6 g des Reaktionsproduktes gemäß Herstellungsbeispiel 2

enthält.

Man erhält auf diese Weise eine wesentliche Verbesserung der Echtheitseigenschaften der Färbung; dies geschieht ohne Verschlechterung der Reibechtheit.

Anwendungsbeispiel 3

Wollkammzug, der mit HERCOSETT 57 ausgerüstet wurde, wird in einem Flottenverhältnis von 1:10 bei Raumtemperatur in ein Färbebad eingebracht, das im Liter

0236896

1 g des Farbstoffes C.I. Acid Red 296
(= Nr. 15 675)
1 g Natriumsulfat kalz.
2,5 g Essigsäure (60° C)
0,6 g des in Beispiel 1 verwendeten
Egalisierhilfsmittels

enthält. Anschließend wird die Färbeflotte innerhalb von 60 Minuten zum Kochen erhitzt und 60 Minuten bei dieser Temperatur gehalten. nach dem Spülen wird die Wolle wie in Beispiel 1 beschrieben nachbehandelt.

Die Färbung weist ein wesentlich erhöhtes Echtheitsniveau auf; dies geschieht ohne Verschlechterung der Reibechtheit.

Anwendungsbeispiel 4

Auf Spulen aufgewickeltes, filzfrei ausgerüstetes Wollgarn wird in einem Flottenverhältnis von 1:15, wie in Beispiel 1 beschrieben, gefärbt, jedoch unter Verwendung einer Färbeflotte, die im Liter

1,6 g des Farbstoffes C.I. Acid Green 50
(= C.I. 44 090)
0,75 g Natriumsulfat kalz.
2,0 g Essigsäure (60 %)
0,5 g des Umsetzungsproduktes aus 1 Mol N-Methylstearylamin und 30 Mol Ethylenoxid

enthält.

Die Nachbehandlung erfolgt wie in Beispiel 1 beschrieben. Die so erhaltene Färbung weist sehr gute Echtheitseigenschaften auf; dies geschieht ohne Verschlechterung der Reibechtheit.

Anwendungsbeispiel 5

Mit HERCOSETT 57 ausgerüstete Wollgarnstränge werden bei Raumtemperatur im Flottenverhältnis von 1:25 in eine Färbeflotte eingebracht, die im Liter

1,2 g des roten Farbstoffes der FR-PS 1 389 345, Beispiel 1
1,0 g Natriumsulfat kalz.
2,0 g Essigsäure (60 %)
0,4 g eines Hilfsmittelgemisches bestehend aus 50 Teilen des Umsetzungsproduktes aus 1 Mol N-Methyl-stearylamin und 20 Mol EO und 50 Teilen des Umsetzungsproduktes aus 1 Mol N-Methyl-stearylamin 35 Mol EO

enthält. Man verfährt sowohl beim Färben als auch beim Nachbehandeln wie in Beispiel 1 beschrieben, jedoch mit dem Unterschied, daß man die Nachbehandlung mit

1,0 g des Reaktionsproduktes gemäß Herstellungsbeispiel 3

durchführt.

Auch hierbei erzielt man eine wesentliche Verbesserung der Echtheitseigenschaften der Färbung; dies geschieht ohne Verschlechterung der Reibechtheit.

Anwendungsbeispiel 6

Wollkammzug, der vorher wie üblich vorchloriert wurde, wird in einem Flottenverhältnis von 1:10 wie in Beispiel 1 beschrieben gefärbt und nach dem Spülen in einer Flotte bei 50° C während 5 min. nachbehandelt, die

4,0 g des Reaktionsproduktes gemäß Herstellungsbeispiel 1

enthält. Anschließend wird der pH-Wert des Behandlungsbades durch Zusatz von Soda auf ca. 10 eingestellt. Die Färbung wird weitere 25 min. bei 50° C behandelt.

Abschließend wird der Kammzug gespült, mit Essigsäure abgesäuert, entwässert und getrocknet.

Die Echtheitsprüfungen, die bei dieser nachbehandelten Färbung durchgeführt werden, zeigen, daß das Echtheitsniveau durch die Nachbehandlung wesentlich verbessert wurde, so daß die IWS-Spezifikationen (IWS-TM 193 und IWS-TM 174) ohne weiteres erreicht sind; dies geschieht ohne Verschlechterung der Reibechtheit.

0236896

## Patentansprüche

1. Kondensationsprodukte aus Alkylendiaminen der Formel

$H_2N-C_nH_{2n}-NH_2$,

in der

n für 4-10 steht,

und Epihalogenhydrin oder 1,3-Dihalogen-2-hydroxypropan.

2. Kondensationsprodukte nach Anspruch 1, dadurch gekennzeichnet, daß sie aus den Alkylendiaminen und Epihalogenhydrin oder 1,3-Dihalogen-2-hydroxypropan im Molverhältnis 1:1 bis 1:3 hergestellt werden.

3. Kondensationsprodukte nach Ansprüchen 1 und 2, dadurch gekennzeichnet, daß als Alkylendiamin Tetramethylendiamin oder gegebenenfalls durch 1 - 3 Methylgruppen substituiertes Hexamethylendiamin verwendet wird.

4. Kondensationsprodukte nach Ansprüchen 1 und 2, dadurch gekennzeichnet, daß als Epihalogenhydrin Epichlorhydrin und als 1,3-Dihalogen-2-hydroxypropan 1,3-Dichlor-2-hydroxypropan verwendet wird.

0236896

5. Kondensationsprodukte nach Ansprüchen 1 und 2, dadurch gekennzeichnet, daß ihre 35 Gew.-% enthaltenden wäßrigen Lösungen bei pH 7 und 20°C eine Viskosität von 30 - 800 mPa.s besitzen.

6. Verfahren zur Nachbehandlung von Färbungen mit anionischen Farbstoffen auf Polyamidgruppen enthaltenden Fasermaterialien, dadurch gekennzeichnet, daß die gefärbten Fasermaterialien mit wäßrigen Lösungen von Kondensationsprodukten des Anspruchs 1 behandelt werden.

7. Verfahren nach Anspruch 6, dadurch gekennzeichnet, daß die gefärbten Fasermaterialien aus chlorierter oder filzfrei ausgerüsteter Wolle bestehen.

8. Verfahren nach Anspruch 7, dadurch gekennzeichnet, daß die Nachbehandlung nach dem Auszieh- oder Foulard-Verfahren erfolgt.

Europäisches Patentamt

# EUROPÄISCHER RECHERCHENBERICHT

Nummer der Anmeldung 0236896

EP 87 10 2911

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 520 424 (NALCO CHEMICAL CO.) * Seiten 9,10; Anspruch 1 * | 1,2 | C 08 G 73/02<br>D 06 P 5/08 |
| | --- | | |
| X | FR-A-2 557 602 (SANDOZ S.A.) * Ansprüche 1,8; Seite 1, Zeilen 13-16 * | 1,2,4, 6 | |
| Y | | 7 | |
| | --- | | |
| X | DE-A-1 645 017 (MONTECATINI EDISON) * Seite 2, Beispiel 1 * | 1,2 | |
| | --- | | |
| Y | EP-A-0 160 879 (BASF) * Ansprüche 4,5 * | 7 | **RECHERCHIERTE SACHGEBIETE (Int. Cl.4)** |
| | --- | | |
| A | EP-A-0 133 933 (CASSELLA AG) * Anspruch 3 * | 4 | C 08 G 73/00<br>D 06 P 5/00 |
| | --- | | |
| A | CHEMICAL ABSTRACTS, Band 94, Nr. 16, April 1981, Seite 81, Zusammenfassung Nr. 123043q, Columbus, Ohio, US; & JP-A-80 152 879 (NITTO BOSEKI CO. LTD) 28-11-1980 | 1,6 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 25-05-1987 | HOEPFNER W.W.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

0236896

Nummer der Anmeldung

EP 87 10 2911

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 006 279 (BAYER AG)<br>* Anspruch 1 *<br>----- | 6 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prufer |
|---|---|---|
| DEN HAAG | 25-05-1987 | HOEPFNER W.W.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument